# FASCICULE DE BREVET EUROPEEN

(11) **EP 3 384 161 B1**
(45) Date de publication et mention de la délivrance du brevet: **05.02.2020**
(21) Numéro de dépôt: 16812913.8
(22) Date de dépôt: 01.12.2016
(51) Int. Cl.: F04C 25/02, F04C 29/12, F04C 18/344, B01D 46/24

(54) **POMPE A VIDE AVEC ELEMENT FILTRANT**
VAKUUMPUMPE MIT FILTERELEMENT
VACUUM PUMP WITH FILTERING ELEMENT

(30) Priorité: 01.12.2015 WO PCT/EP2015/078226
(43) Date de publication de la demande: 10.10.2018
(73) Titulaire: Ateliers Busch S.A., 2906 Chevenez (CH)
(72) Inventeur: SCHALLER, Christian, 2842 Rossemaison (CH); LAVERSIN, Yannick, 25310 Hérimoncourt (FR); LIPPELT, Erik, 79597 Inzlingen (DE); EIBISCH, Jan, 79539 Lörrach (DE)
(74) Mandataire: BOVARD AG
(86) Numéro de dépôt international: PCT/EP2016/079509
(87) Numéro de publication internationale: WO 2017/093441

(56) Documents cités:
- EP-A1- 0 063 656
- EP-A1- 0 538 973
- WO-A1-2008/146045
- FR-A1- 2 255 933
- JP-A- H10 159 781
- US-A- 1 769 153
- US-A- 4 350 592
- US-A- 6 152 713

## Description

### Domaine technique de l'invention

La présente invention se rapporte au domaine des pompes à vide. Plus précisément, elle concerne un dispositif de montage particulier d'éléments filtrants dans le boîtier d'une telle pompe.

### État de la technique

On connaît déjà des pompes à vide, et notamment des pompes à vide rotatives à palettes lubrifiées dont la filtration de l'huile est basée sur le principe de coalescence. Un flux d'air chargé d'huile circule depuis une entrée d'un boîtier, dans lequel un élément filtrant est monté, vers une sortie, d'où il ressort dépourvu de brouillard d'huile. Les éléments filtrants prennent en général la forme de cartouches cylindriques pourvues typiquement d'un embout d'entrée fixé au niveau d'une entrée du boîtier et d'un fond étanche, de telle sorte que le flux d'air traverse les parois cylindriques avant d'être dirigé vers un couvercle d'échappement situé en principe du côté opposé de l'embout d'entrée par rapport à l'axe du cylindre. La cartouche est susceptible d'être maintenue en place dans le boîtier à l'aide d'éléments élastiques, ou d'être fixée sur la paroi d'entrée de la chambre par l'embout d'entrée.

Un élément filtrant en forme de cartouche cylindrique pourvue d'un embout d'entrée fixé au niveau d'une entrée du boîtier et d'un fond étanche, de telle sorte que le flux d'air traverse les parois cylindriques avant d'être dirigé vers un couvercle d'échappement situé du côté opposé de l'embout d'entrée par rapport à l'axe du cylindre est décrit par exemple dans le document EP0063656.

Un élément filtrant en forme de cartouches cylindrique pourvue d'un embout d'entrée fixé au niveau d'une entrée du boîtier et d'un fond étanche est également décrit dans le document EP0538973.

Le document FR2255933 divulgue également un élément filtrant en forme de cartouche. Mais comme dans les documents EP0063656 et EP0538973, le couvercle de la cartouche est connecté de manière étanche avec le boîtier contenant la cartouche. Dans tous ces dispositifs, il n'est donc pas aisé de de monter et démonter l'élément filtrant.

Afin d'augmenter la capacité de filtrage et parallèlement la durée de vie des éléments filtrants, il existe des solutions selon lesquelles plusieurs cartouches sont montées en parallèle à l'intérieur d'un boîtier, comme par exemple celle divulguée dans le document EP 1 034 830 où ces dernières sont montées côte-à-côte sur une paroi interne du boîtier. Cet agencement particulier où l'embout des cartouches n'est plus directement relié à une entrée du boîtier implique une inversion du flux d'air de l'extérieur vers l'intérieur des parois cylindriques des cartouches, même si l'écoulement a toujours lieu le long de l'axe du cylindre, et le remplacement des cartouches y est relativement fastidieux.

Il existe par conséquent un besoin pour une solution exempte de ces limitations connues.

### Résumé de l'invention

Un but de la présente invention est de permettre notamment un montage et un démontage plus simple et plus pratique d'éléments filtrants dans le boîtier de la pompe.

Selon l'invention, ces buts sont atteints grâce à une pompe à vide comprenant un boîtier dans lequel sont agencés un premier orifice d'entrée et un deuxième orifice de sortie pour permettre l'écoulement d'un flux d'air, et à l'intérieur duquel est monté de façon amovible un élément filtrant. L'ensemble est caractérisé en ce qu'au moins un orifice du boîtier choisi parmi le premier orifice d'entrée et le deuxième orifice de sortie est agencé sur un couvercle d'échappement à la fois démontable dudit boîtier, mais solidaire de l'élément filtrant et en ce que la connexion entre le boîtier et le couvercle d'échappement n'est pas étanche.

Ces buts sont également atteints selon l'invention grâce à une cartouche comprenant un élément filtrant adapté pour une telle pompe à vide, prise isolément en tant qu'élément modulaire : en effet, l'élément filtrant est susceptible d'être souvent remplacé au cours de la durée de vie de la pompe. Une telle cartouche modifiée comprend un élément filtrant pourvu d'un embout d'entrée et d'un embout de fermeture agencés de part et d'autre d'une partie filtrante intermédiaire, et elle est caractérisée en ce que le couvercle d'échappement est intégré à l'embout de fermeture de l'élément filtrant.

Un avantage de la solution proposée est qu'elle permet un montage simultané de l'élément filtrant et du couvercle d'échappement dans la pompe, ce qui permet non seulement des économies en termes de main d'œuvre, mais également en termes de coûts et d'efficacité, puisque qu'aucun aménagement particulier n'est plus nécessaire notamment à l'intérieur de la pompe pour la fixation intrinsèque de l'embout de fermeture de l'élément filtrant et le maintien axial de celui-ci. Selon un mode de réalisation particulièrement avantageux, le couvercle d'échappement et l'embout de fermeture sont réalisés d'un seul bloc afin d'en faciliter l'usinage.

Selon des modes de réalisation préférentiels, le couvercle d'échappement est relié à l'embout de fermeture à l'aide d'un raccord, qui fait office de pièce de jonction. Que ce raccord soit agencé de façon monobloc ou non avec le couvercle d'échappement et l'embout de fermeture, il permet de préférence d'intégrer d'autres fonctions telles qu'un filtre anti-bruit, afin de lutter plus efficacement contre les nuisances sonores causées par la pompe, ou encore un filtre à huile par l'intermédiaire d'une chicane pour éviter que de grosses gouttes puissent atteindre la sortie d'échappement. Selon une variante préférée, la forme de la chicane et son agencement entre l'embout de fermeture et le couvercle d'échappement permet que ces deux éléments, à savoir le filtre à huile et le filtre anti-bruit, soient confondus en une seule et même pièce, ce qui permet des gains opérationnels additionnels. Un détrompeur peut par ailleurs de préférence être prévu pour monter la chicane de telle sorte qu'elle soit orientée dans le bon sens.

Selon d'autres modes de réalisation préférentiels, une poignée peut être intégrée au couvercle afin de faciliter encore plus les opérations de montage et de démontage. Par ailleurs, la pièce de jonction entre le couvercle d'échappement et l'embout de fixation peut également présenter des surfaces de guidage afin de faciliter l'insertion et le retrait de l'élément filtrant dans la pompe.

On comprendra de la description détaillée qui suit que les caractéristiques avantageuses tirées des modes de réalisations préférentiels pourront être pris isolément ou en combinaison.

### Brève description des dessins

D'autres caractéristiques avantageuses ressortiront plus clairement de la description qui suit d'un mode particulier de réalisation de l'invention donné à titre d'exemple non limitatif et représenté par les dessins annexés, dans lesquels :
- la figure 1 est une vue schématique d'une pompe à vide comprenant une cartouche filtrante selon l'art antérieur ;
- la figure 2 est une vue schématique d'une pompe à vide contenant un nouvel élément filtrant selon la présente invention ;
- la figure 3 est une vue en trois dimensions d'une cartouche utilisée en tant qu'élément filtrant selon un premier mode de réalisation préférentiel de la présente invention ;
- les figures 4A, 4B, 4C et 4D représentent différentes vues de la cartouche représentée sur la figure 3, à savoir une vue de dessus (Figure 4A), une vue en coupe selon l'axe A-A de la figure 4A (Figure 4B), une vue de derrière du couvercle d'échappement (Figure 4C) et enfin une vue en coupe au niveau du raccord, selon l'axe C-C de la figure 4B (Figure 4D) ; et
- la figure 5 est une vue schématique agrandie de l'extrémité d'entrée d'une cartouche utilisée en tant qu'élément filtrant selon un deuxième mode de réalisation préférentiel de la présente invention.

### Description détaillée

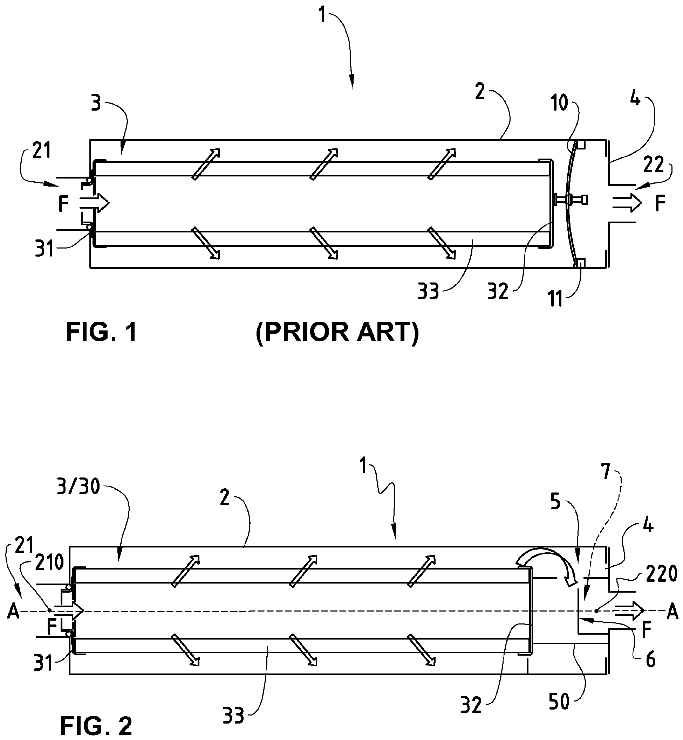

La figure 1 illustre un élément filtrant 3 prenant la forme d'une cartouche montée dans le boîtier 2 d'une pompe à vide 1 selon une solution connue dans l'art antérieur. L'élément filtrant 3 comprend un embout d'entrée 31, monté au niveau d'un premier orifice d'entrée 21 du boîtier 2 de la pompe, et un embout de fermeture 32 entre lesquels est montée une partie filtrante 33 au travers de laquelle est dirigé le flux d'air, matérialisé par les flèches F, qui est ensuite dirigé vers un orifice de sortie 22 du boîtier 2. L'orifice de sortie 22 du boîtier 2 est agencé ici au milieu d'un capot de fermeture amovible, dont l'ouverture permet l'insertion et le retrait de l'élément filtrant 3 à l'intérieur du boîtier 2 de la pompe à vide 1. En raison du deuxième orifice de sortie 22 et du flux d'air F qui traverse ce capot de fermeture, on qualifie généralement cet élément de couvercle (ou flasque) d'échappement 4.

Des joints de type O-Ring et des surfaces de guidage sont en général prévus au niveau de l'orifice d'entrée 21 du boîtier 2 et de l'embout d'entrée 31 des cartouches filtrantes pour faciliter leur montage au niveau de cette extrémité, et en garantir l'étanchéité pour assurer le bon fonctionnement de la pompe à vide 1.

Afin d'assurer le maintien de la cartouche filtrante en position dans le boîtier 2, un élément de fixation élastique réglable 10 vient appuyer contre la face arrière de l'embout de fermeture 32 de la cartouche, et il est retenu par ailleurs axialement par des épaulements latéraux 11 agencés sur la face interne du boîtier 2. Par conséquent, le remplacement d'une cartouche nécessite d'une part le démontage du couvercle d'échappement 4 par rapport au boîtier 1, puis de l'élément de fixation élastique réglable 10 afin de libérer la cartouche filtrante, ce qui est fastidieux.

La figure 2 illustre une vue schématique d'une cartouche modifiée 30 montée dans le boîtier 2 d'une pompe à vide 1. Cette cartouche modifiée 30 comprend désormais non seulement un élément filtrant 3, mais également un couvercle d'échappement 4 intégré, qui permet de pallier ces inconvénients.

La cartouche 30 englobe désormais l'élément filtrant 3, dont le corps présente un axe de symétrie A-A aligné sur l'axe du premier orifice d'entrée 21 et du deuxième orifice de sortie 22, c'est-à-dire leurs centres respectifs (i.e. le premier centre 210 du premier orifice d'entrée 21 et le deuxième centre du deuxième orifice de sortie 220). L'élément filtrant 3 comprend toujours un embout d'entrée 31, et un embout de fermeture 32 étanche pour diriger le flux d'air F vers les parois latérales de la partie intermédiaire filtrante 33. Toutefois, désormais l'embout de fermeture 32 n'est plus maintenu en place à l'intérieur du boîtier 2 par une fixation dédiée, mais directement par la fixation du couvercle d'échappement 4 sur le boîtier 2 lui-même. En effet, comme on peut le constater sur la figure 2, une pièce de jonction que l'on qualifie ici de « raccord » 5 solidarise l'embout de fermeture 32 au couvercle d'échappement 4 de telle sorte qu'une fixation de ce dernier sur le boîtier 2 conditionne simultanément le positionnement de l'élément filtrant 3. La fixation indirecte par l'intermédiaire du couvercle d'échappement 4 permet ainsi d'économiser une opération lors de la mise en place et du changement de la cartouche dans le boîtier 2.

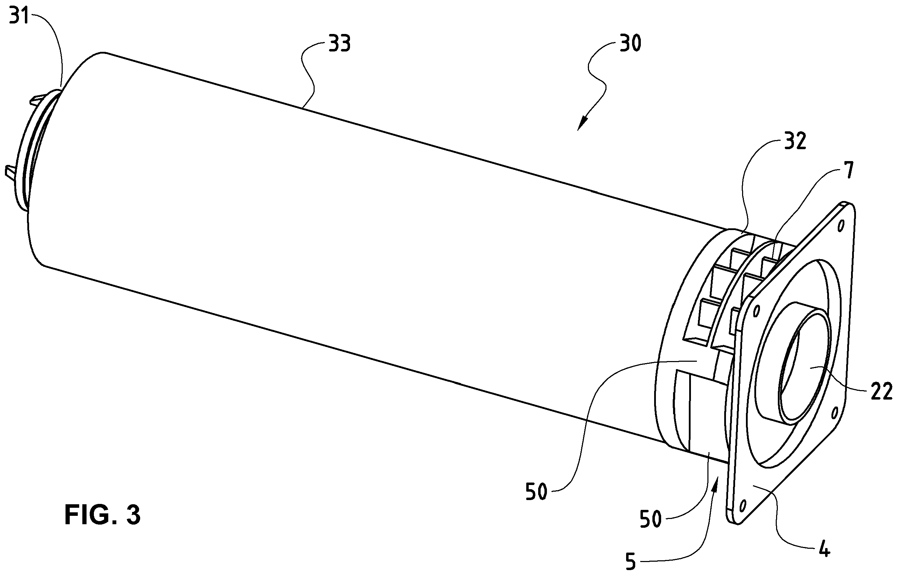

Selon le mode de réalisation préférentiel illustré par la figure 3 pour la cartouche 30, le corps de l'élément filtrant 3 est de préférence cylindrique, afin de faciliter un écoulement isotrope de fluide. L'alignement de l'axe de symétrie A-A du cylindre sur celui des orifices d'entrée et de sortie du boîtier (référencés respectivement 21 et 22) permet par ailleurs d'agencer des surfaces de guidage 50 le long du raccord 5 dans le prolongement partiel du cylindre afin de faciliter les opérations d'insertion et de retrait de la cartouche 30 dans le boîtier 2. De telles surfaces de guidage 50 sont ainsi faciles à usiner, par exemple par moulage, et participent encore davantage à la simplification des opérations de montage et démontage. Pour de telles surfaces de guidage 50 le long de l'axe A-A, d'autres formes géométriques symétriques, par exemple de type parallélépipédiques sont toutefois également envisageables pour le corps de l'élément filtrant 3, et le prolongement partiel de ces formes géométriques peut ainsi former des petites poutrelles ou des pieds orientés selon l'axe A-A à sa périphérie.

Sur la figure 2, on peut constater qu'une chicane 6 est agencée dans l'espace entre l'embout de fermeture 32 et le couvercle d'échappement 4. Cette chicane 6 a pour vocation d'empêcher de grosses gouttes d'huiles formées par coalescence en sortie de l'élément filtrant 3 dans la direction du flux d'air matérialisé par la grande flèche passant derrière l'embout de fermeture 32 d'atteindre le couvercle d'échappement 4. La chicane 6 est ici rattachée à la paroi interne du couvercle d'échappement 4, mais pourrait également être agencée au niveau du raccord 5 lui-même, l'idée sous-jacente étant d'intégrer cette chicane 6 à la cartouche modifiée 30 de telle sorte que celle-ci remplisse une fonction supplémentaire sans requérir pour cela une autre pièce dédiée.

Il est cependant très important de mentionner que, grâce à la structure de la cartouche 30 mentionnée ci-dessus, la connexion entre le boîtier 2 et le couvercle d'échappement 4 ne doit pas nécessairement être étanche. Cependant, la fermeture étanche du boîtier 2 n'est pas préjudiciable au bon fonctionnement de la cartouche modifiée 30 et des joints d'étanchéité ou des dispositifs similaires peuvent également être utilisés.

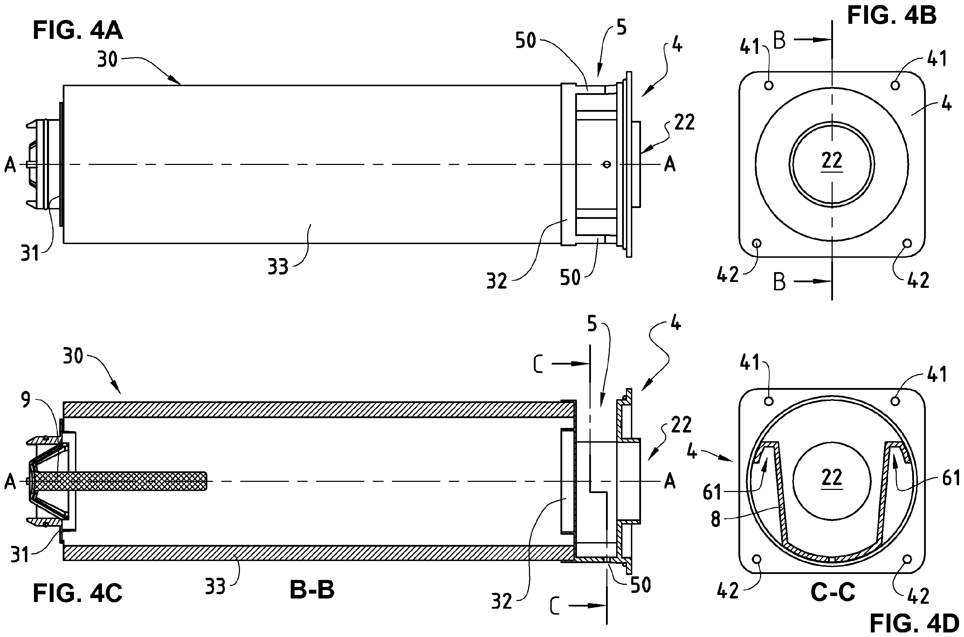

Sur la figure 2 on peut également distinguer, agencée dans ce même espace entre l'embout de fermeture 32 et le couvercle d'échappement 4, la présence d'un dispositif atténuateur de bruit 7. L'atténuateur de bruit 7 est référencé, selon ce mode de réalisation préférentiel, à l'aide d'une flèche en pointillés car il est de préférence formé au niveau de la chicane 6 elle-même. Si l'appareil de moulage le permet, l'atténuateur de bruit 7 peut être agencé de façon monobloc avec la chicane 6, qui dans ce cas fait parallèlement office de « silencieux » en sortie du boîtier 2 de la pompe à vide 1, et ce en complément éventuel de dispositifs d'atténuation de bruit agencés d'ordinaire à l'entrée, comme par exemple la soupape anti-bruit 9 visible sur la figure 4C décrite ci-après.

La figure 3 illustre une cartouche 30 selon un mode de réalisation préférentiel de l'invention, selon lequel le corps de l'élément filtrant 3 est cylindrique et celui-ci est relié à un couvercle d'échappement 4 de forme carrée et en périphérie des coins duquel quatre trous sont prévus pour l'insertion de vis de fixation. L'orifice de sortie 22 est rond afin de permettre un raccordement aisé par exemple à un tuyau de sortie. Ainsi la cartouche 30 reste symétrique par rapport l'axe de l'élément filtrant 3 constitué par l'embout d'entrée 31, l'embout de fermeture 32 et la partie intermédiaire filtrante 33. La forme carrée ainsi que les dimensions du couvercle d'échappement sont choisies de préférence pour correspondre à la forme usuelle des flasques existants et en faciliter ainsi le plaquage contre une surface d'appui de la pompe 1 lors du montage, de même que pour faciliter l'agencement des détrompeurs à sa périphérie. On comprendra toutefois qu'il est également possible d'envisager des oreilles de fixation en forme de languettes formant saillie radialement vers l'extérieur, et qui seraient régulièrement espacées autour d'arcs de cercle de même longueur, ou encore d'autres formes géométriques adéquates, de préférence symétriques.

Selon ce mode de réalisation préférentiel, le couvercle d'échappement 4 est agencé de façon monobloc avec l'embout de fermeture 32, de telle sorte que le raccord 5 ne constitue ici qu'une pièce intrinsèque fictive, car il est impossible de déterminer où cette pièce de jonction intermédiaire commence derrière l'embout de fermeture 32 et où elle s'arrête au niveau du couvercle. On peut toutefois distinguer, dans cette espace intermédiaire, les surfaces de guidage 50 dans le prolongement du cylindre.

Le matériau utilisé pour réaliser l'extrémité de cette cartouche 30 par moulage peut consister par exemple en du polyamide ou du polypropylène, ou n'importe quel matériau adéquat pouvant supporter un flux d'air circulant aux alentours de 80°C. Par ailleurs, on choisira de préférence un matériau conductible, tel que par exemple du polypropylène avec insertion de fibres acier-inox, afin de pouvoir diminuer au maximum le niveau d'électricité statique.

On peut par ailleurs constater sur la figure 3 la présence d'une grille au-dessus de la chicane 6 dans l'espace disponible entre l'embout de fermeture 32 et le couvercle d'échappement 4. Cette grille constitue une variante avantageuse pour la réalisation de l'atténuateur de bruit 7, illustré précédemment sur la figure 2 : en effet, celle-ci permet d'une part de guider le flux d'échappement, et d'autre part, grâce au passage successif du flux d'air dans des sections faibles puis plus importantes, d'en atténuer le niveau sonore. Par ailleurs, au lieu de laisser l'air se détendre à travers un grand trou, le fait qu'il soit divisé en un certain nombre de petits trous ou de fentes, augmente la fréquence du son généré, dont la portée est plus restreinte, et contribuant ainsi à atteindre le même but recherché de réduction des nuisances sonores. Enfin, cette grille permet de créer un flux laminaire éliminant les turbulences normalement générées lors du soufflage, réduisant par conséquent d'autant plus le niveau de bruit.

Ce mode de réalisation préférentiel illustré par la figure 3 pour l'atténuateur de bruit 7 présente par ailleurs deux avantages techniques : le premier consiste à réaliser la fonction d'atténuation anti-bruit en sortie sans qu'aucune pièce nécessitant un volume supplémentaire dédié ne doive être prévue spécifiquement à cet effet, réduisant ainsi l'encombrement, et le deuxième étant, dans le cas où la grille est conçue de façon modulaire par rapport au raccord 5 et à la chicane 6, de simplifier son processus de fabrication ainsi que de rendre son remplacement indépendant de celui des pièces dans lesquelles elle a pour vocation d'être insérée. On comprendra néanmoins qu'indépendamment du fait que l'atténuateur de bruit soit conçu de façon modulaire ou non par rapport aux autres pièces, et notamment la chicane 6, d'autres formes que celle de la grille illustrée à la figure 3 pourront être choisies en vue de réduire niveau sonore sans sortir du cadre de la présente invention.

Dans ce qui suit, on se référera indifféremment aux figures 4A, 4B, 4C et 4D pour la description détaillée de la cartouche modifiée illustrée en trois dimensions par la figure 3 précédente. Pour les raisons de clarté, la grille atténuateur de bruit 7 n'y est toutefois plus représentée.

Sur la figure 4A, on retrouve toutes les références de la figure 3 hormis l'atténuateur de bruit 7, et cette figure et seules les surfaces de guidage 50 sont mises en évidence en périphérie du raccord 5. Bien que la chicane 6 ne soit pas discernable dans son intégralité sur cette figure, on peut constater sur la figure 4B qu'un système de détrompeur formé par des paires de trous dissociés pour le vissage du couvercle d'échappement 4 au boîtier 2 est prévu, soit ici deux premiers trous de vissage 41, et deux deuxièmes trous de vissage 42 présentant des entraxes distincts ; en l'occurrence, l'entraxe entre la première paire de premiers trous de vissage 41 est légèrement plus petite que celui entre la deuxième paire de deuxièmes trous de vissage 42. Un tel système de détrompeur permet d'orienter correctement la chicane 6 à l'intérieur du boîtier 2 afin que le toit - constitué ici par les becquets 61 latéraux bien visibles sur la figure 4D, et qui en font partie intégrante - permettant de retenir les gouttes d'huile formées par gravité en sortie du filtre d'échappement soit orienté correctement. D'autres systèmes de détrompeur seraient également envisageables, par exemple à l'aide d'une fixation à baïonnette, ou avec un autre nombre de vis et d'autres formes géométriques pour le couvercle d'échappement 4 ; néanmoins, cette variante proposée à l'aide de paires de trous et de vis dissociées présente l'avantage d'une mise en oeuvre particulièrement simple.

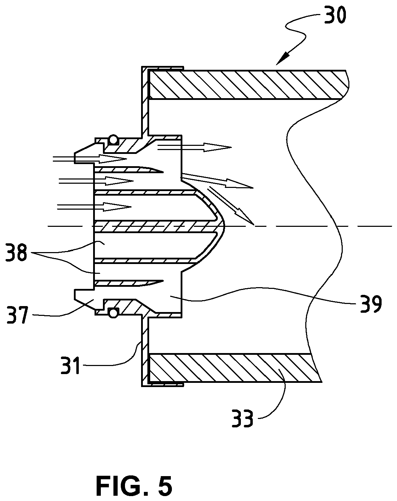

La figure 4C dans le plan de coupe sagittal B-B permet de mettre en évidence une soupape anti-bruit 9 au niveau de l'embout d'entrée 31 de l'élément filtrant 3, qui permet, conjointement à l'atténuateur de bruit en sortie 7 (non illustré sur cette figure), de maximiser les performances d'isolation phonique du travail de pompage vis-à-vis de l'extérieur. Une autre possibilité de réduction de bruit au niveau de l'embout d'entrée 31 de l'élément filtrant 3 est représentée à la figure 5. Dans ce mode de réalisation de l'invention, la valve de limitation du bruit 9 illustrée à la figure 4C peut être remplacée par une réduction de la section de passage du flux d'air. Comme visible à la figure 5, l'air (représenté par les flèches) pénètre à l'intérieur de l'élément filtrant 3 par un anneau circulaire 37 et une série de perçages 38 de telle manière que le flux d'air passant par l'anneau circulaire 37 est détendu rapidement grâce à l'élargissement 39. Ce flux d'air rejoigne ensuite l'air passant par les perçages 38 de manière tangentielle en le plaquant sur la surface conique représentée également à la figure 5. Cette disposition permet d'avoir le même amortissement de bruit qu'en utilisant la valve mobile 9 tout en permettant la réalisation de l'ensemble en une seule pièce facile à usiner. La fiabilité est aussi améliorée puisqu'on ne dispose plus que de pièces statiques dans l'élément filtrant 3.

En revenant au mode de réalisation représenté à la figure 4C, on y distingue toujours une surface de guidage 50 dans le prolongement du bas du cylindre, ainsi qu'un plan de coupe C-C vertical dans l'espace intermédiaire entre l'embout de fixation 32 et le couvercle d'échappement 4 qui permet de mettre en évidence un profil de poignée 8 intégrée au raccord 5, visible sur la figure 4D. Cette poignée 8 est ainsi intégrée au dos du couvercle d'échappement 4 est par conséquent cachée par celui-ci, comme le prouve la figure 4B qui en montre une vue depuis l'extérieur, et présente ainsi un avantage d'ordre esthétique, de même qu'une réduction en termes d'encombrement et donc des avantages en termes de compacité. Une telle configuration permet également de faciliter la liaison par un raccordement éventuel en sortie.

La poignée intégrée 8 présente une forme particulière, ici en forme de « U » n'interférant pas d'une part avec le prolongement de l'orifice (c'est-à-dire, selon le mode de réalisation, le deuxième orifice de sortie 22 dudit couvercle d'échappement 4) afin de ne pas perturber l'écoulement de fluide lors du mode fonctionnement habituel de la pompe à vide 1. Une telle forme en « U » permet du reste une préhension particulièrement facile et intuitive pour l'utilisateur, comme un tiroir : il suffit pour cela d'introduire ses doigts dans l'orifice de sortie 22 et de tirer ensuite le couvercle d'échappement 4 vers soi.

Selon le mode de réalisation préférentiel décrit, la poignée intégrée 8 est aussi agencée de façon monobloc, c'est-à-dire d'un seul tenant avec l'embout de fermeture 32 et le couvercle d'échappement 4. Elle fait ainsi partie intégrante d'une pièce de jonction fictive entre ces deux éléments et à ce titre, on peut considérer que la poignée intégrée 8 est aussi de préférence agencée de façon monobloc avec le raccord 5, ce qui permet d'en simplifier le processus d'usinage.

Bien que dans la description qui précède, le mode de réalisation préférentiel illustré se réfère à une structure de type monobloc pour la cartouche 30 proposée dans le cadre de la présente invention, on comprendra facilement que d'autres variantes sont possibles pour assembler les différentes pièces constitutives de cette cartouche 30 ayant attrait aux différentes fonctions techniques qu'elles remplissent sans sortir du cadre de l'invention. Il est notamment possible de réaliser toutes les pièces de la cartouche 30 de manière indépendante et de prévoir des moyens de fixation adéquats pour permettre leur assemblage. Une cartouche 30 composée de telles « pièces détachées » et ces « pièces détachées » pour la cartouche 30 font également partie de la présente invention au même niveau que la cartouche 30 réalisée de manière monobloc. En outre, d'autres formes géométriques, de préférence symétriques, sont également envisageables pour le couvercle d'échappement et l'élément filtrant. Par ailleurs, la détermination des orifices d'entrée et de sortie du boîtier a été prise par convention par rapport au sens du flux d'air usuel, mais il est également possible d'envisager des dispositifs de pompage qui impliqueraient un flux d'air inversé faisant passer l'air de l'extérieur vers l'intérieur de la cartouche de filtrage.

**Liste des références**

| | |
|---|---|
| **1** | Pompe à vide |
| **2** | Boîtier |
| **21** | Orifice d'entrée |
| **210** | Centre de l'orifice d'entrée |
| **22** | Orifice de sortie |
| **220** | Centre de l'orifice de sortie |
| **3** | Elément filtrant |
| **30** | Cartouche |
| **31** | Embout d'entrée |
| **32** | Embout de fermeture |
| **33** | Partie intermédiaire filtrante |
| **37** | Anneau circulaire |
| **38** | Perçage(s) |
| **39** | Elargissement |
| **4** | Couvercle d'échappement |
| **41** | Premiers trous de vissage |
| **42** | Deuxièmes trous de vissage |
| **5** | Raccord (pièce de jonction) |
| **50** | Surfaces de guidage |
| **6** | Chicane |
| **61** | Becquet de retenue |
| **7** | Atténuateur de bruit (arrière) |
| **8** | Poignée |
| **9** | Soupape anti-bruit (avant) |
| **10** | Elément de fixation élastique |
| **11** | Languettes de maintien |
| | |
| **A-A** | Axe de la cartouche |
| **B-B** | Premier plan de coupe |
| **C-C** | Deuxième plan de coupe |
| | |
| **F** | Flux d'air |

## Revendications

1. Pompe à vide (1) comprenant un boîtier (2) dans lequel sont agencés un premier orifice d'entrée (21) et un deuxième orifice de sortie (22) pour permettre l'écoulement d'un flux d'air (F), et à l'intérieur duquel est monté de façon amovible un élément filtrant (3),
**caractérisée en ce qu'**au moins un orifice dudit boîtier (2) choisi parmi ledit premier orifice d'entrée (21) et ledit deuxième orifice de sortie (22) est agencé sur un couvercle d'échappement (4) à la fois démontable dudit boîtier (2) mais solidaire dudit élément filtrant (3),
et **en ce que** la connexion entre le boîtier (2) et le couvercle d'échappement (4) n'est pas étanche.

2. Pompe à vide (1) selon la revendication 1, ledit élément filtrant (3) comprenant un embout d'entrée (31) et un embout de fermeture (32) agencés de part et d'autre d'une partie filtrante (33) intermédiaire, ledit couvercle d'échappement (4) étant fixé audit embout de fermeture (32) par l'intermédiaire d'un raccord (5).

3. Pompe à vide (1) selon la revendication 2, qu'une chicane (6) est agencée au niveau dudit raccord (5) ou dudit couvercle d'échappement (4).

4. Pompe à vide (1) selon la revendication 3, **caractérisé en ce qu'**un atténuateur de bruit (7) est disposé entre l'embout de fermeture (32) et ledit orifice dudit boîtier (2).

5. Pompe à vide (1) selon l'une des revendications 3 ou 4, ledit couvercle d'échappement (4) étant pourvu d'un système de détrompeur afin d'orienter correctement ladite chicane (6).

6. Pompe à vide (1) selon la revendication 5, ledit couvercle d'échappement (4) étant vissé audit boîtier (2) à l'aide de deux paires de vis insérées respectivement dans des premiers trous (41) et des deuxièmes trous de vissage (42) dudit couvercle d'échappement (4), lesdits premiers trous (41) et deuxièmes trous (42) présentant des entraxes respectifs distincts.

7. Pompe à vide (1) selon l'une des revendications 2 à 6, **caractérisée en ce que** le couvercle d'échappement (4) et le raccord (5) sont agencés de façon monobloc avec ledit embout de fermeture (32) dudit élément filtrant (3).

8. Pompe à vide (1) selon l'une des revendications 1 à 6, **caractérisée en ce qu'**une poignée (8) est intégrée au dos dudit couvercle d'échappement (4).

9. Pompe à vide (1) selon la revendication 8, **caractérisée en ce que** ladite poignée (8) a une forme de « U » n'interférant pas avec ledit premier orifice d'entrée (21) ou ledit deuxième orifice de sortie (22) dudit couvercle d'échappement (4).

10. Pompe à vide (1) selon l'une des revendications 2 à 7, **caractérisé en ce que** l'ensemble élément filtrant (3) - raccord (5) - couvercle d'échappement (4) forme une cartouche (30) présentant un axe de symétrie (A-A), l'embout d'entrée (31) étant fixé au niveau dudit premier orifice d'entrée (21), et l'axe de symétrie (A-A) étant confondu avec le segment reliant le premier centre (210) dudit premier orifice d'entrée (21) au deuxième centre (220) dudit deuxième orifice d'entrée (22).

11. Pompe à vide (1) selon la revendication 10, caractérisée en ce des surfaces de guidage (50) dans la direction dudit axe de symétrie (A-A) sont prévues dans le prolongement de la forme géométrique dudit élément filtrant (3) de ladite cartouche (30).

12. Cartouche (30) pour pompe à vide (1), ladite pompe à vide comprenant un boîtier (2) à l'intérieur duquel est susceptible d'être monté de façon amovible un élément filtrant (3) selon l'une des revendications 1 à 11 précédentes, ladite cartouche (30) comprenant ledit élément filtrant (3) pourvu d'un embout d'entrée (31) et d'un embout de fermeture (32) agencés de part et d'autre d'une partie filtrante (33) intermédiaire, ladite cartouche (30) étant **caractérisé en ce qu'**elle comprend un couvercle d'échappement (4) intégré audit embout de fermeture (32) dudit élément filtrant (3), la connexion entre le boîtier (2) et le couvercle d'échappement (4) n'étant pas étanche lorsque la cartouche (30) est correctement installée dans la pompe à vide (1).

13. Cartouche (30) pour pompe à vide (1) selon la revendication 12, **caractérisée en ce que** ledit couvercle d'échappement (4) est agencé de façon monobloc avec ledit embout de fermeture (32) dudit élément filtrant (3).

14. Cartouche (30) pour pompe à vide (1) selon l'une des revendications 12 ou 13, **caractérisée en ce que** le couvercle d'échappement (4) comprend par ailleurs une poignée (8) intégrée.

15. Cartouche (30) pour pompe à vide (1) selon l'une des revendications 12 à 14, **caractérisée en ce qu'**elle comprend un raccord (5) reliant ledit embout de fermeture (32) audit couvercle d'échappement (4), et par ailleurs une chicane (6).

## Patentansprüche

1. Vakuumpumpe (1), umfassend ein Gehäuse (2), in welchem eine erste Einlassöffnung (21) und eine zweite Auslassöffnung (22) angeordnet sind, um das Strömen eines Luftstroms (F) zu ermöglichen, und in dessen Innerem ein Filterelement (3) lösbar befestigt ist,
**dadurch gekennzeichnet, dass** mindestens eine Öffnung des Gehäuses (2), welche aus der ersten Einlassöffnung (21) und der zweiten Auslassöffnung (22) ausgewählt ist, an einem Auslassdeckel (4) angeordnet ist, welcher zugleich lösbar von dem Gehäuse (2) aber integral mit dem Filterelement (3) ist,
und dass die Verbindung zwischen dem Gehäuse (2) und dem Auslassdeckel (4) nicht dicht ist.

2. Vakuumpumpe (1) nach Anspruch 1, wobei das Filterelement (3), eine Einlassdüse (31) und eine Verschlussdüse (32) umfasst, angeordnet zu beiden Seiten eines Zwischenfilterteils (33), wobei der Auslassdeckel (4) mittels eines Verbindungsglieds (5) an der Verschlussdüse (32) befestigt ist.

3. Vakuumpumpe (1) nach Anspruch 2, <**gekennzeichnet dadurch**,> dass ein Leitblech (6) an dem Verbindungsglied (5) oder an dem Auslassdeckel (4) angeordnet ist.

4. Vakuumpumpe (1) nach Anspruch 3, **dadurch gekennzeichnet, dass** ein Geräuschunterdrücker (7) zwischen der Verschlussdüse (32) und der Öffnung des Gehäuses (2) angeordnet ist.

5. Vakuumpumpe (1) nach einem der Ansprüche 3 oder 4, wobei der Abschlussdeckel (4) mit einem Ausrichtungssystem versehen ist, um das Leitblech (6) korrekt auszurichten.

6. Vakuumpumpe (1) nach Anspruch 5, wobei der Auslassdeckel (4) mit dem Gehäuse (2) mit Hilfe von zwei Schraubenpaaren verschraubt ist, welche in erste Schraubenlöcher (41) und zweite Schraubenlöcher (42) des Auslassdeckels (4) eingeführt sind, wobei die ersten Löcher (41) und zweiten Löcher (42) jeweils unterschiedliche Abstände haben.

7. Vakuumpumpe (1) nach einem der Ansprüche 2 bis 6, **dadurch gekennzeichnet, dass** der Auslassdeckel (4) und das Verbindungsglied (5) integral, d.h. als ein Stück, mit der Verschlussdüse (32) des Filterelements (3) ausgebildet sind.

8. Vakuumpumpe (1) nach einem der Ansprüche 1 bis 6, **dadurch gekennzeichnet, dass** ein Handgriff (8) an der Rückseite des Auslassdeckels (4) integriert ist.

9. Vakuumpumpe (1) nach Anspruch 8, **dadurch gekennzeichnet, dass** der Handgriff (8) eine "U"-Form aufweist, welche nicht mit der ersten Einlassöffnung (21) oder der zweiten Auslassöffnung (22) des Auslassdeckels (4) interferiert.

10. Vakuumpumpe (1) nach einem der Ansprüche 2 bis 7, **dadurch gekennzeichnet, dass** die Einheit Filterelement (3) - Verbindungsglied (5) - Auslassdeckel (4) eine Kartusche (30) bildet, welche eine Symmetrieachse (A-A) hat, die Einlassdüse (31) an der ersten Einlassöffnung (21) befestigt ist und die Symmetrieachse (A-A) koinzident mit der Strecke ist, welche die erste Mitte (210) der ersten Einlassöffnung (21) mit der zweiten Mitte (220) der zweiten Auslassöffnung (22) verbindet.

11. Vakuumpumpe (1) nach Anspruch 10, **dadurch gekennzeichnet, dass** Führungsflächen (50) in der Richtung der Symmetrieachse (A-A) in der Verlängerung der geometrischen Form des Filterelements (3) der Kartusche (30) vorgesehen sind.

12. Kartusche (30) für eine Vakuumpumpe (1), wobei die Vakuumpumpe ein Gehäuse (2) umfasst, an dessen Innenseite ein Filterelement (3) lösbar befestigbar ist, gemäss einem der vorhergehenden Ansprüche 1 bis 11, wobei die Kartusche (30) das Filterelement (3) enthält, welches mit einer Einlassdüse (31) und einer Verschlussdüse (32) versehen ist, die an jeder Seite eines Zwischenfilterteils (33) angeordnet sind, wobei die Kartusche (30) **dadurch gekennzeichnet ist, dass** sie einen in der Verschlussdüse (32) des Filterelements (3) integrierten Auslassdeckel (4) umfasst, wobei die Verbindung zwischen dem Gehäuse (2) und dem Auslassdeckel (4) nicht dicht ist, wenn die Kartusche (30) korrekt in der Vakuumpumpe (1) installiert ist

13. Kartusche (30) für eine Vakuumpumpe (1) nach Anspruch 12, **dadurch gekennzeichnet, dass** der Auslassdeckel (4) in einer integralen Weise, d.h. als ein Stück, mit der Verschlussdüse (32) des Filterelements (3) ausgebildet ist.

14. Kartusche (30) für eine Vakuumpumpe (1) nach einem der vorhergehenden Ansprüche 12 oder 13, **dadurch gekennzeichnet, dass** der Auslassdeckel (4) ferner einen integrierten Handgriff (8) umfasst.

15. Kartusche (30) für eine Vakuumpumpe (1) nach einem der Ansprüche 12 bis 14, **dadurch gekennzeichnet, dass** sie ein Verbindungsglied (5) umfasst, welches die Verschlussdüse (32) mit dem Auslassdeckel (4) verbindet und zusätzlich ein Leitblech (6).

## Claims

1. Vacuum pump (1) comprising a casing (2) in which are disposed a first inlet orifice (21) and a second outlet orifice (22) to allow the flowing of a flow of air (F), and in the interior of which a filtering element (3) is mounted in a removable way,
**characterized in that** at least one orifice of the said casing (2) selected from among the said first inlet orifice (21) and the said second outlet orifice (22) is disposed on an exhaust lid (4) which is at the same time removable from the said casing (2) but integral with the said filtering element (3),
and **in that** the connection between the casing (2) and the exhaust lid (4) is not tight.

2. Vacuum pump (1) according to claim 1, the said filtering element (3) comprising an inlet nozzle (31) and a closure nozzle (32) disposed on both sides of an intermediate filtering part (33), the said exhaust lid (4) being fixed to the said closure nozzle (32) by means of a connector (5).

3. Vacuum pump (1) according to claim 2, characterized in> that a baffle (6) is disposed at the said connector (5) or at the said exhaust lid (4).

4. Vacuum pump (1) according to claim 3, **characterized in that** a noise suppressor (7) is disposed between the closure nozzle (32) and the said orifice of the said casing (2).

5. Vacuum pump (1) according to one of the claims 3 or 4, the said exhaust lid (4) being provided with an alignment system in order to correctly align the said baffle (6).

6. Vacuum pump (1) according to claim 5, the said exhaust lid (4) being screwed to the said casing (2) with the aid of two pairs of screws inserted respectively in first screw holes (41) and second screw holes (42) of the said exhaust lid (4), the said first holes (41) and second holes (42) having respectively distinct spacings.

7. Vacuum pump (1) according to one of the claims 2 to 6, **characterized in that** the exhaust lid (4) and the connector (5) are designed in an integral way, i.e. as a single piece, with the said closure nozzle (32) of the said filtering element (3).

8. Vacuum pump (1) according to one of the claims 1 to 6, **characterized in that** a handle (8) is integrated in the back of the said exhaust lid (4).

9. Vacuum pump (1) according to claim 8, **characterized in that** the said handle (8) has a "U" shape not interfering with the said first inlet orifice (21) or the said second outlet orifice (22) of the said exhaust lid (4).

10. Vacuum pump (1) according to one of the claims 2 to 7, **characterized in that** the assembly filtering element (3) - connector (5) - exhaust lid (4) forms a cartridge (30) having a symmetry axis (A-A), the inlet nozzle (31) being fixed at the said first inlet orifice (21), and the symmetry axis (A-A) being coincident with the segment connecting the first center (210) of the said first inlet orifice (21) to the second center (220) of the said second outlet orifice (22).

11. Vacuum pump (1) according to claim 10, **characterized in that** guide surfaces (50) in the direction of the said symmetry axis (A-A) are provided in the prolongation of the geometric form of the said filtering element (3) of the said cartridge (30).

12. Cartridge (30) for a vacuum pump (1), the said vacuum pump comprising a casing (2) on the inside of which a filtering element (3) is able to be mounted in a removable way according to one of the preceding claims 1 to 11, the said cartridge (30) containing the said filtering element (3) provided with an inlet nozzle (31) and a closure nozzle (32) arranged on either side of an intermediate filtering part (33), the said cartridge (30) being **characterized in that** it comprises an exhaust lid (4) integrated in the said closure nozzle (32) of the said filtering element (3), the connection between the casing (2) and the exhaust lid (4) not being tight when the cartridge (30) is correctly installed in the vacuum pump (1).

13. Cartridge (30) for a vacuum pump (1) according to claim 12, **characterized in that** the said exhaust lid (4) is designed in an integral way, i.e. as a single piece, with the said closure nozzle (32) of the said filtering element (3).

14. Cartridge (30) for a vacuum pump (1) according to one of the claims 12 or 13, **characterized in that** the exhaust lid (4) further comprises an integrated handle (8).

15. Cartridge (30) for a vacuum pump (1) according to one of the claims 12 to 14, **characterized in that** it comprises a connector (5) connecting the said closure nozzle (32) to the said exhaust lid (4), and in addition a baffle (6).
